**Europäisches Patentamt**

**European Patent Office**

**Office européen des brevets**

(11) Numéro de publication : **0 366 600 B1**

# (12) FASCICULE DE BREVET EUROPEEN

(45) Date de publication du fascicule du brevet :
**06.05.92 Bulletin 92/19**

(51) Int. Cl.$^5$ : **E01B 9/18**, F16B 33/02

(21) Numéro de dépôt : **89810696.8**

(22) Date de dépôt : **15.09.89**

(54) **Dispositif de fixation à vis dans un élément de construction en béton.**

(30) Priorité : **19.09.88 FR 8812185**

(43) Date de publication de la demande :
**02.05.90 Bulletin 90/18**

(45) Mention de la délivrance du brevet :
**06.05.92 Bulletin 92/19**

(84) Etats contractants désignés :
**AT DE GB IT**

(56) Documents cités :
**BE-A- 899 370**
**DE-C- 226 526**
**FR-A- 2 425 014**
**FR-A- 2 566 017**
**GB-A- 558 097**
**US-A- 3 266 363**

(73) Titulaire : **ETABLISSEMENTS VAPE (Sté anonyme)**
**R.N. 84**
**F-01430 St Martin-du-Fresne (FR)**

(72) Inventeur : **Vanotti, Gérard**
**Giriat**
**F-01430 Maillat (FR)**

(74) Mandataire : **Meylan, Robert Maurice et al**
**c/o BUGNION S.A. 10, route de Florissant**
**Case Postale 375**
**CH-1211 Genève 12 - Champel (CH)**

EP 0 366 600 B1

# Description

L'invention concerne un dispositif de fixation à vis dans un élément de construction en béton, comprenant une vis à âme cylindrique et une gaine en matière synthétique destinée à être fixée dans l'élément en béton, cette gaine présentant intérieurement un filet correspondant au filet de la vis et, extérieurement, des nervures périphériques d'ancrage de section triangulaire et deux nervures longitudinales, la gaine en matière synthétique étant en outre entourée d'une gaine métallique constituée de deux coquilles assemblées entre elles par sertissage le long des nervures longitudinales de la gaine en matière synthétique. La gaine peut être intégrée dans l'élément en béton à sa fabrication ou placée en reprise avec scellement par résine ou mortier à prise rapide.

Un dispositif de ce type est décrit dans le brevet FR 2 425 014 au nom du demandeur. Ces dispositifs sont particulièrement destinés à la fixation de rails sur des traverses en béton, application dans laquelle les dispositifs ont donné d'excellents résultats. La gaine en matière plastique est surmoulée sur le tire-fond ce qui rend souvent difficile le dévissage du tire-fond.

En outre lors du revissage du tire-fond, si le tire-fond est engagé obliquement relativement à l'axe de la gaine, le filet du tire-fond ne s'engage pas correctement dans le filet de la gaine, mais vient sectionner et détruire le filet de la gaine, cisaillant celle-ci, réduisant dans une grande mesure sa résistance à la traction et pouvant conduire à la destruction de la gaine. Or, en pratique, le tire-fond est toujours engagé plus ou moins obliquement dans la gaine.

La présente invention a pour but d'améliorer les caractéristiques mécaniques de ces dispositifs, en particulier sa résistance au cisaillement, d'améliorer la qualité de son ancrage dans le béton et d'éliminer les risques de destruction de la gaine par l'introduction oblique de la vis dans la gaine.

Le dispositif de fixation selon l'invention est caractérisé en ce que la partie supérieure de la gaine est dépourvue de nervures périphériques, que la pente des flancs des nervures circulaires tournés vers l'entrée de la gaine est d'environ 30°, que la gaine métallique s'appuie sur ces flancs, mais présente un jeu avec les autres flancs des nervures circulaires, et que les filets de la vis et de la gaine ont un profil trapézoïdal, la section de la nervure formant l'entrée du filet de la gaine allant en se rétrécissant homothétiquement en direction de l'entrée de la gaine.

La forme trapézoïdale des filets de la gaine et de la vis améliore sensiblement la résistance de la gaine au cisaillement.

Le rétrécissement progressif homothétique de la nervure de l'entrée du filet de la gaine a montré, de façon étonnante, que l'engagement des filets de la vis et de la gaine se fait toujours correctement et en douceur quelle que soit la position de la vis. L'introduction de la vis dans la gaine peut par conséquent s'effectuer sans précaution particulière et sans risque de détruire la gaine. Sa résistance mécanique n'est donc pas affectée et la vis peut être dévissée et revissée dans la gaine à plusieurs reprises.

La pente d'environ 30° des flancs supérieurs des nervures circulaires de la gaine a pour effet de diriger les efforts de compression sur les nervures périphériques de la gaine et leur réaction sur le béton dans des directions optimales, en évitant des efforts dans la zone fragile formée par le zone conique entourant la partie supérieure de la gaine, tout en assurant une bonne retenue axiale de la gaine.

Le jeu entre la gaine métallique et la gaine en matière synthétique équivaut à un jeu radial qui autorise une dilatation de la gaine en matière synthétique dans la gaine métallique, c'est-à-dire sans que cette dilatation n'agisse sur le béton en créant des contraintes susceptibles d'entraîner, d'une part, un déchirement de la gaine métallique, le coefficient de dilatation de la matière synthétique étant d'environ dix fois supérieur à celui du métal de la gaine métallique et, d'autre part, une contrainte sur le béton susceptible d'entraîner une fissuration de celui-ci.

Le dessin annexé représente, à titre d'exemple, une forme d'exécution de l'invention.

La figure 1 est une demi-coupe axiale à tavers une gaine et sa vis, en l'occurrence un tire-fond.

La figure 2 est une vue en coupe radiale selon II-II de la figure 1.

La figure 3 est une vue de détail de la figure 1.

La figure 4 est un agrandissement du filetage de la gaine à l'entrée de le filetage.

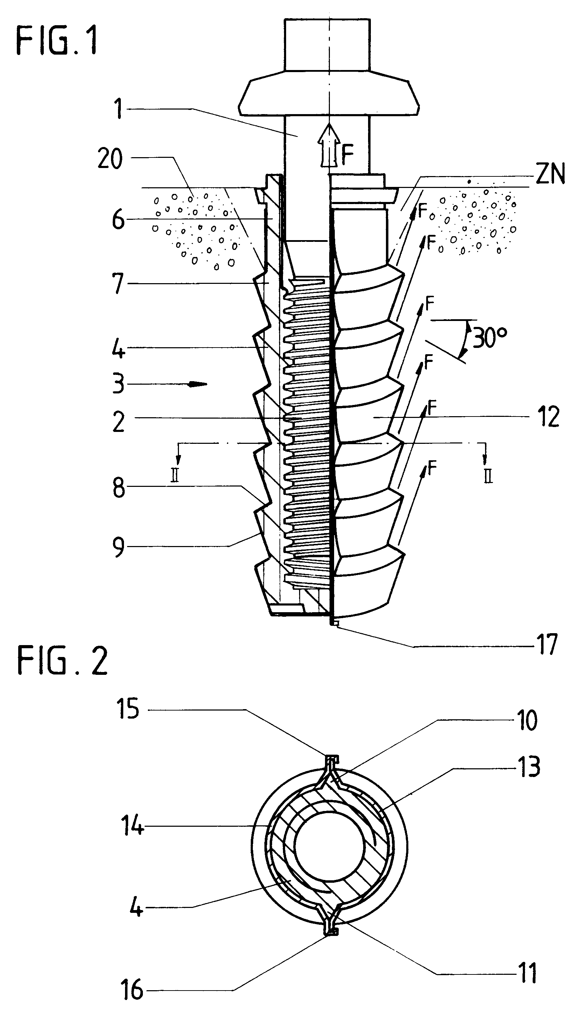

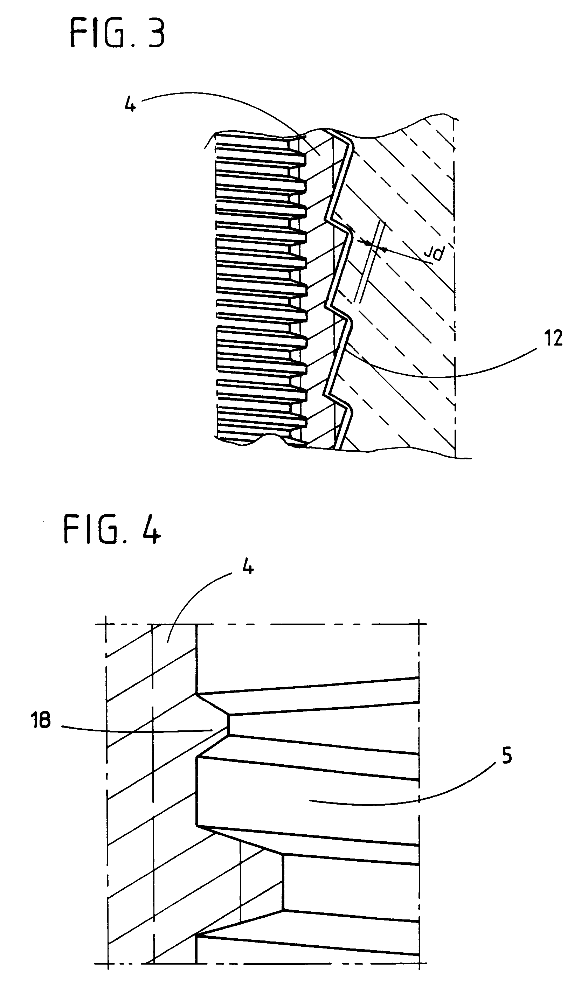

Le dispositif représenté à la figure 1 comprend un tire-fond 1 présentant une partie filetée 2 venant se visser dans une gaine 3 en forme de douille noyée dans une traverse en béton 20. Cette gaine d'ancrage est constituée d'une gaine 4 en matière synthétique thermoplastique, par exemple en polyamide renforcé de fibres de verre, présentant intérieurement, sur la plus grande partie de sa longueur, un filet 5 (figure 4) de forme trapézoïdale homologue du filet trapézoïdal du tire-fond 1. Dans sa partie supérieure, la gaine 4 présente une partie cylindrique 6 lisse intérieurement. Sur le reste de sa longueur, la gaine 4 est pourvue de plusieurs nervures périphériques 7 de section triangulaire à sommet arrondi, c'est-à-dire formant, pour chaque nervure, une surface tronconique 8 tournée vers l'entrée de la gaine et une surface tronconique 9 tournée vers l'extrémité inférieure de la gaine. La gaine thermoplastique 4 est en outre munie de deux nervures longitudinales 10 et 11 (figure 2) destinées à empêcher la rotation de la gaine dans le béton.

La gaine en polyamide 4 est entourée d'une gaine en acier 12 constituée de deux coquilles 13 et 14 (figure 2) fixées par sertissage selon deux génératrices 15 et 16 situées en face des nervures longitudinales 10 et 11 de la gaine en matière synthétique 4, ainsi qu'en 17 à l'extrémité inférieure de la gaine 4. Cette gaine métallique 12 (figure 3), épouse la forme de la gaine en matière synthétique 4 et assure une bonne adhérence du béton sur le dispositif, l'adhérence du béton sur la matière synthétique étant très mauvaise.

La gaine métallique 12 est en contact avec les flancs 8 des renflements annulaires 7, mais elle est par contre séparée des flancs inférieurs 9 de ses bourrelets par un jeu Jd (figure 3). Ce jeu Jd oblique correspondant à un jeu radial qui autorise une dilatation de la gaine en matière synthétique 4 dans la gaine métallique 12. Ce jeu a donc pour effet de compenser la différence des coefficients de dilatation des deux gaines 4 et 12.

La pente des flancs supérieurs 8 des nervures périphériques 7, relativement à un plan perpendiculaire à l'axe de la gaine, est égale à 30°. Lorsqu'une force de traction F agit sur le tire-fond 1, la gaine 3 s'appuie sur le béton par les flancs 8 de ces nervures 7. L'inclinaison de ces flancs 8 a pour effet de diriger les efforts f de ces zones d'appui selon des directions obliques telles que ces efforts s'écartent de la zone fragile du béton constituée par la partie conique ZN, tout en présentant encore une composante suffisante parallèle à l'axe de la gaine, composante nécessaire à s'opposer à la traction F.

Le début de la partie filetée de la gaine est réalisé de façon particulière. La nervure 18 constituant l'entrée du filet va en diminuant de façon homothétique en direction de l'entrée de la gaine. Cette mesure assure un engagement correct des filets du tire-fond 1 et de la gaine 3 quelque soit la position du tire-fond relativement à la gaine. Il n'est donc pas nécessaire que l'axe du tire-fond coïncide avec l'axe de la gaine lors de l'introduction du tire-fond, ce qui n'est pratiquement jamais le cas. L'extrémité du tire-fond peut être simplement conique, meulée. la gaine ne risque plus d'être détruite lors du vissage du tire-fond.

Le dispositif selon l'invention assure en outre un bon isolement électrique des lignes de rail grâce à la très bonne résistance diélectrique du polyamide. Ces dispositifs montrent en outre un grand pouvoir d'absorption de certaines fréquences nuisibles dans le système de fixation en milieu béton, ce qui rend son emploi particulièrement intéressant pour la fixation de voies de chemin de fer ou la liaison d'éléments préfabriqués en béton vibré ou précontraint, par exemple des voussoirs de tunnel.

## Revendications

1. Dispositif de fixation à vis dans un élément de construction en béton, comprenant une vis (1) à âme cylindrique et une gaine (4) en matière synthétique destinée à être fixée dans l'élément en béton, cette gaine présentant intérieurement un filet (5) correspondant au filet de la vis et, extérieurement, des nervures périphériques d'ancrage (7) de section triangulaire et deux nervures longitudinales (10, 11), la gaine en matière synthétique étant en outre entourée d'une gaine métallique (12) constituée de deux coquilles assemblées entre elles par sertissage le long des nervures longitudinales de la gaine en matière synthétique, caractérisé en ce que la partie supérieure (6) de la gaine est dépourvue de nervures périphériques, que la pente des flancs (8) des nervures périphériques tournés vers l'entrée de la gaine est d'environ 30°, que la gaine métallique (12) s'appuie sur ces flancs (8) mais présente un jeu (Jd) avec les autres flancs (9) des nervures périphériques, et que les filets (5) de la vis et de la gaine ont un profil trapézoïdal, la section de la nervure (18) formant l'entrée du filet de la gaine allant en se rétrécissant homothétiquement en direction de l'entrée de la gaine.

## Patentansprüche

1. Vorrichtung zur Schraubenbefestigung in einem Bauelement aus Beton mit einer Schraube (1), die einen zylindrischen Kern aufweist, und mit einer Hülle aus Kunststoff, die dazu bestimmt ist, im Betonelement befestigt zu werden und innen ein dem Schraubengewinde entsprechendes Gewinde (5) und aussen in Umfangsrichtung verlaufende Verankerungsrippen (7) mit dreieckförmigem querschnitt sowie zwei Längsrippen (10, 11) aufweist, wobei diese Hülle aus Kunststoff ausserdem von einer metallischen Hülle (12) umgeben ist, die aus zwei Schalen besteht, welche durch eine Bördelverbindung längs der Längsrippen der aus Kunststoff bestehenden Hülle miteinander verbunden sind, dadurch gekennzeichnet, dass der obere Teil (6) der Hülle frei von Umfangsrippen ist, dass die Neigung der zum Eingang der Hülle hin gerichteten Flanken der Umfangsrippen ungefähr 30° beträgt, dass sich die metallische Hülle (12) auf diesen Flanken (8) abstützt, jedoch ein Spiel (Jd) mit den anderen Flanken (9) der Umfangsrippen aufweist, dass die Windungen (5) der Schraube und der Hülle ein trapezförmiges Profil haben und dass der querschnitt der den Gewindeeingang der Hülle bildenden Rippe (18) unter homothetischer Verengung in Richtung auf den Eingang der Hülle verläuft.

## Claims

1. A screw fixing device for a concrete construction element, comprising a screw (1) having a cylindrical core and a sheath (4) of synthetic material intended to be fixed into the concrete element, this sheath possessing internally a thread (5) corresponding to the thread of the screw and, externally, peripheral anchoring ribs (7) of triangular cross-section and two longitudinal ribs (10, 11), the sheath of synthetic material further being surrounded by a metal sheath (12) comprising two shells which are mutually assembled by crimping along the longitudinal ribs of the sheath of synthetic material, characterized in that the upper part (6) of the sheath possesses no peripheral ribs, that the inclination of the flanks (8) of the peripheral ribs facing the entry to the sheath is approximately 30°, that the metal sheath (12) bears on these flanks (8) but has a play (Jd) relative to the other flanks (9) of the peripheral ribs, and that the threads (5) of the screw and of the sheath are trapezoidal, the section of the rib (18) constituting the inlet of the thread of the sheath decreasing progressively and homothetically towards the sheath inlet.

FIG.1

1
20
6
7
4
3
2
8
9

F

ZN
F
F
F
30°
F
F
12
F
II
II
17

FIG.2

15
14
4
16

10
13
11

# FIG. 3

# FIG. 4